Europäisches Patentamt

European Patent Office

Office européen des brevets

(11) Veröffentlichungsnummer: **0 365 775 B1**

(12) # EUROPÄISCHE PATENTSCHRIFT

(45) Veröffentlichungstag der Patentschrift: **03.03.93**

(21) Anmeldenummer: **89114904.9**

(22) Anmeldetag: **11.08.89**

Verbunden mit 89910428.5/0437453 (europäische Anmeldenummer/Veröffentlichungsnummer) durch Entscheidung vom 27.04.92.

(51) Int. Cl.5: **B05D 7/26**, C09D 133/06, C08F 220/10, //(C09D133/06, 161:20),(C08F220/10,220:28, 220:04)

---

(54) **Verfahren zur Herstellung eines mehrschichtigen Überzuges unter Verwendung wässriger Beschichtungszusammensetzungen.**

---

(30) Priorität: **28.09.88 DE 3832826**

(43) Veröffentlichungstag der Anmeldung: **02.05.90 Patentblatt 90/18**

(45) Bekanntmachung des Hinweises auf die Patenterteilung: **03.03.93 Patentblatt 93/09**

(84) Benannte Vertragsstaaten: **AT BE CH DE ES FR GB IT LI NL SE**

(56) Entgegenhaltungen: **EP-A- 0 225 612** **US-A- 4 413 037**

(73) Patentinhaber: **BASF Lacke + Farben AG Glasuritstrasse 1 W-4400 Münster(DE)**

(72) Erfinder: **Schwarte, Stephan Blomenkamp 48 W-4400 Münster(DE)** Erfinder: **Poth, Ulrich Albachtenerstrasse 97 d W-4400 Münster(DE)**

(74) Vertreter: **Münch, Volker, Dr. et al c/o BASF Lacke + Farben AG Patentabteilung Glasuritstrasse 1 Postfach 61 23 W-4400 Münster (DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung eines mehrschichtigen schützenden und/oder dekorativen Überzuges auf einer Substratoberfläche, bei dem

(1) eine geeignete pigmentierte Basisbeschichtungszusammensetzung auf die Substratoberfläche aufgebracht wird

(2) aus der in Stufe (1) aufgebrachten Zusammensetzung ein Polymerfilm gebildet wird

(3) auf die so erhaltene Basisschicht eine ein wasserverdünnbares Polyacrylatharz als Bindemittel und ein Aminoplastharz als Vernetzungsmittel enthaltende transparente wäßrige Deckbeschichtungszusammensetzung aufgebracht wird und anschließend

(4) die Basisschicht zusammen mit der Deckschicht eingebrannt wird.

Die Erfindung betrifft auch wäßrige Beschichtungszusammensetzungen, wasserverdünnbare Polyacrylatharze und ein Verfahren zur Herstellung von wasserverdünnbaren Polyacrylatharzen.

Das Verfahren gemäß Oberbegriff des Patentanspruchs 1 ist bekannt. Er wird insbesondere zur Herstellung von Automobil-Metalleffektlackierungen eingesetzt (vgl. z.B. US-A-3,639,147, DE-A-33 33 072 und EP-A-38127).

Aus ökonomischen und ökologischen Gründen ist es wünschenswert, in Stufe (3) des oben beschriebenen sogenannten "base coat clear coat"-Verfahrens wäßrige Deckbeschichtungszusammensetzungen einzusetzen.

Die Deckbeschichtungszusammensetzungen müssen mit Hilfe von automatischen Lackieranlagen durch Spritzen applizierbar sein. Dazu müssen sie bei Spritzviskosität einen so hohen Feststoffgehalt aufweisen, daß mit ein bis zwei Spritzgängen (Kreuzgängen) Lackfilme mit ausreichender Schichtdicke erhalten werden, und sie müssen eingebrannte Lackfilme liefern, die ein gutes Aussehen (guter Verlauf, hoher Glanz, guter Decklackstand...) zeigen.

Die in Beispiel 2 der EP-A-38127 offenbarte wäßrige Deckbeschichtungszusammensetzung erfüllt nicht alle obengenannten Forderungen.

Die der vorliegenden Erfindung zugrundeliegende Aufgabenstellung besteht in der Bereitstellung von wäßrigen Deckbeschichtungszusammensetzungen, die die obengenannten Forderungen erfüllen.

Diese Aufgabe wird überraschenderweise durch Deckbeschichtungszusammensetzungen erfüllt, die ein wasserverdünnbares Polyacrylatharz als Bindemittel enthalten, das erhältlich ist, indem

(I) ein Gemisch aus

(a1) einem mit (a2), (a3), (b1) und (b2) copolymerisierbaren, im wesentlichen carboxylgruppenfreien (Meth)acrylsäureester oder einem Gemisch aus solchen (Meth)acrylsäureestern und

(a2) einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei ist, oder einem Gemisch aus solchen Monomeren und gegebenenfalls

(a3) einem mit (a1), (a2), (b1) und (b2) copolymerisierbaren, im wesentlichen carboxylgruppenfreien ethylenisch ungesättigten Monomeren oder einem Gemisch aus solchen Monomeren

zu einem organischen Lösemittel oder Lösemittelgemisch gegeben und in Gegenwart mindestens eines Polymerisationsinitiators polymerisiert wird und

(II) nachdem mindestens 80 Gew.-% des aus (a1), (a2) und gegebenenfalls (a3) bestehenden Gemisches zugegeben worden sind

(b1) 60 - 100 Gew.-% eines mindestens eine Carboxylgruppe pro Molekül tragenden, mit (a1), (a2) und (a3) copolymerisierbaren ethylenisch ungesättigten Monomeren oder eines Gemisches aus solchen Monomeren zusammen mit

(b2) 0 bis 40 Gew.-% eines carboxylgruppenfreien, mit (a1), (a2), (a3) und (b1) copolymerisierbaren ethylenisch ungesättigten Monomers oder eines Gemisches aus solchen Monomeren

zugegeben werden und weiterpolymerisiert wird und

(III) nach Beendigung der Polymerisation das erhaltene Polyacrylatharz zumindest teilweise neutralisiert und in Wasser dispergiert wird, wobei die Summe der Gewichtsanteile von (b1) und (b2) stets 100 Gew.-% ergibt und (a1), (a2), (a3), (b1) und (b2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise -20°C bis +40°C, aufweist.

Die in Stufe (1) des erfindungsgemäßen Verfahrens aufzubringenden pigmentierten Basisbeschichtungszusammensetzungen sind gut bekannt (vgl. z.B. US-A-3,639,147, EP-A-38127, DE-A-33 33 072 und EP-A-279813). In Stufe (1) werden vorzugsweise Metallpigmente enthaltende, insbesondere Aluminiumpigmente enthaltende Basisbeschichtungszusammensetzungen eingesetzt. Auf diese Weise werden Metalleffektlackierungen erhalten.

Bevor die Herstellung der erfindungsgemäß einzusetzenden Polyacrylatharze näher beschrieben wird, werden zwei Begriffsklärungen vorausgeschickt:

1.) Als Abkürzung für "Methacrylsäure - oder Acrylsäure" - wird gelegentlich (Meth)acrylsäure - verwendet.

2.) Die Formulierung "im wesentlichen carboxylgruppenfrei" soll ausdrücken, daß die Komponenten (a1), (a2) und (a3) einen geringen Carboxylgruppengehalt (höchstens aber soviel, daß ein aus den Komponenten (a1), (a2) und (a3) hergestelltes Polyacrylatharz eine Säurezahl von höchstens 10 hat) aufweisen können. Es ist aber bevorzugt, daß der Carboxylgruppengehalt der Komponenten (a1), (a2) und (a3) so niedrig wie möglich gehalten wird. Besonders bevorzugt werden carboxylgruppenfreie (a1), (a2) und (a3) Komponenten eingesetzt.

Zur Herstellung der erfindungsgemäß einzusetzenden Polyacrylatharze kann als Komponente (a1) jeder mit (a2), (a3), (b1) und (b2) copolymerisierbare, im wesentlichen carboxylgruppenfreie Ester der (Meth)-acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat und cycloaliphatische (Meth)acrylsäureester, wie z.B. Cyclohexyl(meth)acrylat, genannt. Bevorzugt werden Gemische aus Alkylacrylaten und/oder Alkylmethacrylaten als (a1) Komponente eingesetzt, die zu mindestens 25 Gew.-% aus n-Butyl- und/oder t-Butylacrylat und/oder n-Butyl- und/oder t-Butylmethacrylat bestehen.

Als Komponente (a2) können alle mit (a1), (a3), (b1) und (b2) copolymerisierbaren ethylenisch ungesättigten Monomere, die mindestens eine Hydroxylgruppe pro Molekül tragen und im wesentlichen carboxylgruppenfrei sind, oder ein Ge- misch aus solchen Monomeren eingesetzt werden. Als Beispiele werden Hydroxyalkylester der Acrylsäure, Methacrylsäure oder einer anderen $\alpha,\beta$-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxyalkylester der Acrylsäure und Methacrylsäure, in denen die Hydroxyalkylgruppe bis zu 4 Kohlenstoffatome enthält, Umsetzungsprodukte aus cyclischen Estern, wie z.B. $\epsilon$-Caprolacton und diesen Hydroxyalkylestern, oder Mischungen aus diesen Hydroxyalkylestern bzw. $\epsilon$-caprolactonmodifizierten Hydroxyalkylestern eingesetzt. Als Beispiele für derartige Hydroxyalkylester werden 2-Hydroxyethylacrylat, 2-Hydroxyproacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat und 4-Hydroxybutylmethacrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül, können auch eingesetzt werden.

Als Komponente (a3) können alle mit (a1), (a2), (b1) und (b2) copolymerisierbaren, im wesentlichen carboxylgruppenfreien ethylenisch ungesättigten Monomere oder Gemische aus solchen Monomeren eingesetzt werden. Als Komponente (a3) werden vorzugsweise vinylaromatische Kohlenwasserstoffe, wie Styrol, $\alpha$-Alkylstyrol und Vinyltoluol, eingesetzt.

Die Komponenten (a1), (a2) und gegebenenfalls (a3) werden gegebenenfalls in einem geeigneten organischen Lösemittel gemischt und zu einem organischen Lösemittel oder Lösemittelgemisch gegeben und dort in Gegenwart mindestens eines Polymerisationsinitiators polymerisiert. Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Als Beispiel für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Dieth-ylenglykolmonomethylether, Diethylenglykolmonoethylether, Diethylenglykoldiethylether, Diethylenglykolmo-nobutylether und 3-Methyl-3-methoxybutanol genannt. Als Beispiele für brauchbare Polymerisationsinitiatoren werden freie Radikale bildende Initiatoren, wie z.B. Benzoylperoxid, Azobisisobutyronitril und t-Butylperbenzoat genannt. Die Polymerisation wird bei einer Temperatur von 80 bis 160°C, vorzugsweise 120 bis 160°C durchgeführt. Das Gemisch aus (a1), (a2) und gegenenfalls (a3) wird innerhalb von 2 bis 8 Stunden, vorzugsweise innerhalb von 3 bis 6 Stunden zu dem organischen Lösemittel oder Lösemittelgemisch zugegeben und dort in Gegenwart mindestens eines freie Radikale bildenden Initiators polymerisiert.

Nachdem mindestens 80 Gew.-%, vorzugsweise 100 Gew.-% der aus (a1), (a2) und gegebenenfalls (a3) bestehenden Mischung zugegeben worden sind, werden in der Stufe (II)

(b1) 60 - 100 Gew.-% eines mindestens eine Carboxylgruppe pro Molekül tragenden, mit (a1), (a2) und (a3) copolymerisierbaren ethylenisch ungesättigten Monomeren oder eines Gemisches aus solchen Monomeren zusammen mit

(b2) 0 - 40 Gew.-% eines carboxylgruppenfreien, mit (a1), (a2), (a3) und (b1) copolymerisierbaren ethylenisch ungesättigten Monomers oder eines Gemisches aus solchen Monomeren

zugegeben und so lange weiterpolymerisiert, bis die in Stufe (I) und (II) zugegebenen Monomeren im wesentlichen vollständig umgesetzt worden sind.

Es ist bevorzugt, in Stufe (II) 100 Gew.-% der Komponente (b1) einzusetzen. Mit anderen Worten ausgedrückt: Es ist bevorzugt, in Stufe (II) die Komponente (b1) ohne Zumischung der Komponente (b2) einzusetzen.

Als Komponente (b1) kann jedes mindestens eine Carboxylgruppe pro Molekül tragende, mit (a1), (a2) und (a3) copolymerisierbare ethylenisch ungesättigte Monomer oder ein Gemisch aus solchen Monomeren eingesetzt werden. Als Komponenten (b1) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt. Als Komponente (b1) können auch Maleinsäuremono(meth)-acryloyloxiethylester, Bernsteinsäuremono(meth)acryloyloxiethylester und Phtalsäuremono(meth)-acryloyloxiethylester eingesetzt werden.

Als Komponente (b2) kann jedes mit (a1), (a2), (a3) und (b1) copolymerisierbare ethylenisch ungesättigte Monomer oder ein Gemisch aus solchen Monomeren eingesetzt werden. Als Komponente (b2) können alle bei der Beschreibung der Komponenten (a1), (a2) und (a3) aufgezählten Monomere eingesetzt werden.

Die Komponenten (b1) und gegebenenfalls (b2) werden vorzugsweise innerhalb von 10 bis 60 Minuten, besonders bevorzugt innerhalb von 15 bis 45 Minuten zugegeben.

Nach Beendigung der Zugabe der Monomeren (b1) und gegebenenfalls (b2) wird so lange weiterpolymerisiert, bis alle eingesetzten Monomeren im wesentlichen vollständig umgesetzt worden sind.

Die Komponenten (a1), (a2), (a3), (b1) und (b2) werden in Art und Menge so ausgewählt, daß das Reaktionsprodukt eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise -20°C bis +40°C, aufweist.

Die Glasübergangstemperaturen von Polyacrylatharzen können nach folgender Formel berechnet werden:

$$\frac{1}{T_G} = \sum_{n=1}^{n=x} \frac{W_n}{T_{Gn}}$$

$T_G$ = Glasübergangstemperatur des Polyacrylatharzes
x = Anzahl der im Polyacrylatharz einpolymerisierten verschiedenen Monomere
$W_n$ = Gewichtsanteil des n-ten Monomers
$T_{Gn}$ = Glasübergangstemperatur des Homopolymers aus dem n-ten Monomer

Die Menge und Zugabegeschwindigkeit des Initiators wird vorzugsweise so gewählt, daß ein Polyacrylatharz mit einem zahlenmittleren Molekulargewicht von 2500 bis 20000 erhalten wird. Es ist bevorzugt, die Initiatorzugabe zum gleichen Zeitpunkt wie die Zugabe der Mischung aus den Komponenten (a1), (a2) und gegebenenfalls (a3) zu beginnen und etwa eine halbe Stunde nachdem die Zugabe der Komponente (b1) und gegebenenfalls (b2) beendet worden ist, zu beenden. Der Initiator wird vorzugsweise in konstanter Menge pro Zeiteinheit zugegeben. Nach Beendigung der Initiatorzugabe wird das Reaktionsgemisch noch so lange (in der Regel etwa 1 1/2 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung unumgesetzt zurückbleiben kann.

Die erfindungsgemäßen Polyacrylatharze werden hergestellt, indem 40 bis 87,5 Gew.-%, vorzugsweise 55 bis 80 Gew.-% der Komponente (a1), 10 bis 45 Gew.-%, vorzugsweise 12 bis 35 Gew.-% der Komponente (a2), 0 bis 25 Gew.-% vorzugsweise 8 bis 18 Gew.-% der Komponente (a3), 2,5 bis 15 Gew.-%, vorzugsweise 3 bis 7 Gew.-% der Komponente (b1) und 0 bis 6 Gew.-% der Komponente (b2) eingesetzt werden, wobei die Summe der Gewichtsanteile von (a1), (a2), (a3), (b1) und (b2) stets 100 Gew.-% ergibt.

Nach Beendigung der Polymerisation wird das erhaltene Polyacrylatharz zumindest teilweise neutralisiert und in Wasser dispergiert.

Zur Neutralisation können sowohl organische Basen als auch anorganische Basen, wie Ammoniak und Hydrazin, verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Die Neutralisationsreaktion wird im allgemeinen durch Mischen der neutralisierenden Base mit dem Polyacrylatharz durchgeführt. Dabei wird vorzugsweise soviel Base eingesetzt, daß die Deckbeschichtungszusammensetzung einen pH-Wert von 7-8,5, vorzugsweise 7,2 bis 7,8 aufweist.

Anschließend wird das partiell oder vollständig neutralisierte Polyacrylatharz durch Zugabe von Wasser dispergiert. Dabei entsteht eine wäßrige Polyacrylatharzdispersion. Gegebenenfalls kann ein Teil oder das gesamte organische Lösemittel abdestilliert werden. Die erfindungsgemäßen Polyacrylatharzdispersionen enthalten Polyacrylatharzteilchen, deren mittleren Teilchengröße vorzugsweise zwischen 60 und 250 nm liegt (Meßmethode: Laserlichttrennung, Meßgerät: Malvern Autosizer 2C).

Aus den so erhaltenen wäßrigen Polyacrylatharzdispersionen werden nach allgemein bekannten Methoden durch Zumischung eines Aminoplastharzes und gegebenenfalls weiterer Zusätze, wie z.B. Verlaufshilfsmitteln, UV-Stabilisatoren, transparenten Pigmenten usw. erfindungsgemäße Deckbeschichtungszusammensetzungen erhalten.

Die erfindungsgemäßen Deckbeschichtungszusammensetzungen enthalten vorzugsweise soviel Aminoplastharz, daß das Gewichtsverhältnis zwischen Polyacrylatharzfeststoff und Aminoplastharzfeststoff 60 : 40 bis 90 : 10, besonders bevorzugt 70 : 30 bis 85 : 15, beträgt.

Prinzipiell können alle Aminoplastharze, die sich mit dem erfindungsgemäßen Polyacrylatharz zu einer stabilen Deckbeschichtungszusammensetzung verarbeiten lassen, als Vernetzungsmittel eingesetzt werden. Vorzugsweise werden Melamin-Formaldehydharze, die mit aliphatischen Alkoholen, die vorzugsweise 1 bis 4 Kohlenstoffatome pro Molekül enthalten, teilweise oder vollständig verethert sind, als Vernetzungsmittel eingesetzt.

Vor der Applikation werden die erfindungsgemäßen Deckbeschichtungszusammensetzungenauf Spritzviskosität (i.a. 20 bis 40 sec. Auslaufzeit aus DIN-Becher 4 (DIN 53 211 (1974)) und einen pH-Wert von 7,0 bis 8,5, vorzugsweise 7,2 bis 7,8 eingestellt.

Die erfindungsgemäßen Deckbeschichtungszusammensetzungen

- weisen bei Spitzviskosität einen so hohen Feststoffgehalt (20 bis 45 Gew.-%, vorzugsweise 32 bis 40 Gew.-%) auf, daß mit ein bis zwei Spritzgängen (Kreuzgänge) Lackfilme mit ausreichender Schichtdikke (die Dicke des eingebrannten Lackfilms sollte vorzugsweise zwischen 25 und 45 $\mu$m liegen) erhalten werden und
- liefern eingebrannte Lackfilme mit einem sehr guten Aussehen (guter Verlauf, hoher Glanz, guter Decklackstand...) und guten mechanisch-technologischen Eigenschaften und
- weisen einen verhältnismäßig niedrigen Anteil an organischen Cosolventien (weniger als 35 Gew.-%, bezogen auf den Gesamtfeststoffgehalt an Bindemitteln und Vernetzungsmitteln) auf.

Wenn die erfindungsgemäßen Deckbeschichtungszusammensetzungen zusammen mit wasserverdünnbaren Basisbeschichtungszusammensetzungen zur Herstellung von Metalleffektlackierungen verwendet werden, dann werden Metalleffektlackierungen erhalten, in denen die transparente Deckschicht besonders gut auf der Basisschicht haftet.

Die erfindungsgemäßen Deckbeschichtungszusammensetzungen können neben dem erfindungsgemäß eingesetztem Polyacrylatharz auch noch vernetzte Polymermikroteilchen wie sie z.B. in der EP-A-38127 offenbart sind und/oder weitere verträgliche Harze wie z.B. wasserverdünnbare oder wasserlösliche Polyacrylatharze, Polyesterharze, Alkydharze oder Epoxidharzester enthalten,und sie können auch pigmentiert werden.

In den folgenden Beispielen wird die Erfindung näher erläutert:

A. Herstellung erfindungsgemäßer wasserverdünnbarer Polyacrylatharze

In einem 4 l Stahlkessel, ausgestattet mit zwei Monomerzuläufen, einem Initiatorzulauf, Rührer, Thermometer, Ölheizung und Rückflußkühler werden 20 Gew.-Teile Butylglykol vorgelegt und auf 140°C aufgeheizt. Dann wird eine Lösung von 4,5 Gew.-Teilen Butylperbenzoat in 5 Gew.-Teilen Butylglykol in einer solchen Geschwindigkeit zugegeben, daß die Zugabe nach 4 h, 30 min. abgeschlossen ist. Mit Beginn der Zugabe der Butylperbenzoatlösung wird auch mit der Zugabe der Mischung aus (a1), (a2) und (a3) begonnen (vgl. Tabelle 1). Die Mischung aus (a1), (a2) und (a3) wird in einer solchen Geschwindigkeit zugegeben, daß die Zugabe nach 3 h, 50 min abgeschlossen ist. Nachdem die aus (a1), (a2) und (a3) bestehende Mischung vollständig zugegeben worden ist, wird die Komponente (b1) (vgl. Tabelle 1) innerhalb von 20 min. zugegeben.

Tabelle 1

Zugegebene Mengen in Gewichtsteilen

| Komponente | | P1 | P2 | P3 | P4 | P5 | P6 |
|---|---|---|---|---|---|---|---|
| (a1) | Butylacrylat | 24,0 | 22,0 | 22,0 | 27,1 | 22,0 | 22,0 |
| | Butylmethacrylat | 20,0 | 20,0 | 20,0 | 24,0 | - | 20,0 |
| | Methylmethacrylat | 15,0 | 15,0 | 15,0 | 15,0 | 15,0 | 30,0 |
| | t-Butylacrylat | - | - | - | 20,0 | - | - |
| | Ethylmethacrylat | - | - | - | - | 7,5 | - |
| (a2) | 2 Hydroxypropyl-acrylat | 23,0 | 23,0 | 13,9 | 23,0 | 23,0 | 23,0 |
| (a3) | Styrol | 15,0 | 15,0 | 15,0 | 15,0 | 7,5 | - |
| (b1) | Acrylsäure | 3,0 | 5,0 | 5,0 | 5,0 | 5,0 | 5,0 |

Die so erhaltene Harzlösung wird mit Dimethylethanolamin bei ca. 95°C bis zu einem Neutralisationsgrad von 80 % neutralisiert. Anschließend wird soviel Wasser zugegeben, daß der Feststoffgehalt der Dispersion etwa 60 Gew.-% beträgt. Die erhaltenen Dispersionen zeigen folgende Kennzahlen.

## Tabelle 2

| | P1 | P2 | P3 | P4 | P5 | P6 |
|---|---|---|---|---|---|---|
| Festkörper (in Gew.-%; 1h 130°C) | 59,4 | 59,4 | 59,0 | 59,6 | 59,0 | 59,5 |
| Säurezahl theoretisch | 23,3 | 38,9 | 38,9 | 38,9 | 38,9 | 38,9 |
| gemessen | 27,0 | 38,4 | 36,4 | 37,7 | 39,0 | 38,0 |
| Neutralisationsgrad (%) | 80 | 80 | 80 | 80 | 80 | 80 |
| OH-Zahl | 100 | 100 | 60 | 100 | 100 | 100 |
| Teilchengröße (nm)[1] | 114 | 143 | 186 | 106 | 119 | 120 |

[1] Die Teilchengröße wurde über Laserlichtstreuung bestimmt. Gerät: Malvern Autosizer 2 C.

B. Herstellung erfindungsgemäßer transparenter wäßriger Deckbeschichtungszusammensetzungen

Aus 60,00 Gew.-% einer gemäß Punkt A hergestellten Polyacrylatdispersion, 10,00 Gew.-% einer 90 %igen Lösung eines handelsüblichen wasserverdünnbaren Melaminformaldehydharzes in Isobutanol (Cymel® 327), 0,05 Gew.-% eines handelsüblichen Verlaufsmittels (Fluorad® FC 430) und 29,95 Gew.-% destilliertem Wasser werden transparente Deckbeschichtungszusammensetzungen hergestellt und mit einer 10 %igen wäßrigen Dimethylethanolaminlösung und destilliertem Wasser auf Spritzviskosität (24 sec. Auslaufzeit aus DIN Becher 4 (DIN 53 211 (1974)) und einen pH-Wert von 7,4 bis 7,5 eingestellt. Die Deckbeschichtungszusammensetzungen enthalten 20 Gew.-% Cosolvent, bezogen auf den Gesamtfeststoffgehalt an Polyacrylatharz und Melamin-Formaldehydharz.

C. Applikation der erfindungsgemäßen transparenten Deckbeschichtungszusammensetzungen und Prüfung der eingebrannten Lackfilme

Auf ein mit einer handelsüblichen Elektrotauchlackierung und einem handelsüblichen Füller beschichtetes phosphatiertes Stahlblech wird eine wasserverdünnbare, mit Aluminiumplättchen pigmentierte Basisbeschichtungszusammensetzung gemäß EP-A-279813 so appliziert, daß eine Trockenfilmdicke von 12 - 15 μm erhalten wird. Die applizierte Basisbeschichtungszusammensetzung wird 10 min. bei Raumtemperatur und 10 min bei 80°C getrocknet. Dann wird eine gemäß Punkt B erhaltene Deckbeschichtungszusammensetzung in zwei Kreuzgängen mit einer Minute Zwischenablüftzeit auf die Basisschicht gespritzt. Schließlich wird 20 min. bei Raumtemperatur getrocknet und 30 min. bei 130°C im Umluftofen eingebrannt. Die so erhaltenen mehrschichtigen Überzüge wurden mehreren Prüfungen unterzogen. Die Prüfergebnisse sind in der folgenden Tabelle zusammengefaßt:

Tabelle 3

|  | P1 | P2 | P3 | P4 | P5 | P6 |
|---|---|---|---|---|---|---|
| Applikationsfeststoffgehalt (1 h 130°C, in Gew.-%) | 42,0 | 37,2 | 39,1 | 36,8 | 36,0 | 36,5 |
| Dicke der transparenten Deckschicht (in $\mu$m) | 41 | 39 | 43 | 33 | 35 | 32 |
| Gitterschnitt[1] | 0 | 0 | 0 | 0 | 0 | 0 |
| Glanz[2] | 90 | 92 | 89 | 90 | 90 | 90 |
| DOI | 86,5 | 84,3 | 86,7 | 81,2 | 83,7 | 83,0 |
| Blasengrad[3] nach Belastung[4] | MOGO | MOGO | MOGO | MOGO | MOGO | MOGO |
| Glanz [2] nach Belastung[4] | 85 | 85 | 84 | 82 | 82 | 82 |
| DOI nach Belastung [4] | 73,4 | 80,6 | 76,7 | 78,4 | 78,5 | 78,2 |

(1) Prüfung nach DIN 53 151 inclusive Tesaabriß-Test

(2) Glanzgrad nach DIN 67 530, Winkel 20°

(3) nach DIN 53 209

(4) 240 h bei 40°C KK (nach DIN 50 017)

D. Vergleichsbeispiel

Die zur Herstellung des erfindungsgemäßen Polyacrylatharzes P2 eingesetzten Monomeren (a1), (a2), (a3) und (b1) werden gemischt und polymerisiert. Die Polymerisationsbedingungen sind die gleichen wie bei der Herstellung des erfindungsgemäßen Polyacrylatharzes P2. Der einzige Unterschied zur Herstellung des erfindungsgemäßen Polyacrylatharzes besteht darin, daß die Komponente (b1) nicht erst nach der Zugabe der Mischung aus (a1), (a2) und (a3) zugegeben wird, sondern bereits zusammen mit (a1), (a2) und (a3) zugegeben wird. Eine aus dem so hergestellten Polyacrylatharz V gemäß B hergestellte wäßrige Deckbeschichtungszusammensetzung weist bei einer Viskosität von 24 DIN-Sekunden (Auslaufzeit aus DIN-Becher 4 (DIN 53 211 (1974)) und einem pH-Wert von 7,4 bis 7,5 lediglich einen Feststoffgehalt von 24,1 Gew.-% auf.

Das folgende Schaubild zeigt die Viskosität der gemäß A hergestellten und mit Wasser verdünnten Polyacrylatharzdispersion P2 in Abhängigkeit vom Feststoffgehalt der Dispersion im Vergleich zu einer analogen Dispersion des Polyacrylatharzes V (pH-Wert der beiden Dispersionen: 7,8). Es wird deutlich, daß die Viskosität der erfindungsgemäßen Polyacrylatharzdispersion P2 bei Feststoffgehalten von 25 bis etwa 53 Gew.-% tiefer liegt als die Viskosität der vergleichbaren Dispersion des Polyacrylatharzes V.

FK = Feststoffgehalt

## Patentansprüche

1. Verfahren zur Herstellung eines mehrschichtigen schützenden und/oder dekorativen Überzugs auf einer Substratoberfläche, bei dem

(1) eine geeignete pigmentierte Basisbeschichtungszusammensetzung auf die Substratoberfläche aufgebracht wird

(2) aus der in Stufe (1) aufgebrachten Zusammensetzung ein Polymerfilm gebildet wird

(3) auf die so erhaltene Basisschicht eine ein wasserverdünnbares Polyacrylatharz als Bindemittel und ein Aminoplastharz als Vernetzungsmittel enthaltende transparente wäßrige Deckbeschichtungszusammensetzung aufgebracht wird und anschließend

9

EP 0 365 775 B1

(4) die Basisschicht zusammen mit der Deckschicht eingebrannt wird,

dadurch gekennzeichnet, daß die Deckbeschichtungszusammensetzung ein wasserverdünnbares Polyacrylatharz als Bindemittel enthält, das erhältlich ist, indem

(I) ein Gemisch aus

(a1) einem mit (a2), (a3), (b1) und (b2) copolymerisierbaren, im wesentlichen carboxylgruppenfreien (Meth)acrylsäureester oder einem Gemisch aus solchen (Meth)acrylsäureestern und

(a2) einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(a3) einem mit (a1), (a2), (b1) und (b2) copolymerisierbaren, im wesentlichen carboxylgruppenfreien ethylenisch ungesättigten Monomeren oder einem Gemisch aus solchen Monomeren

zu einem organischen Lösemittel oder Lösemittelgemisch gegeben und in Gegenwart mindestens eines Polymerisationsinitiators polymerisiert wird und

(II) nachdem mindestens 80 Gew.-% des aus (a1), (a2) und gegebenenfalls (a3) bestehenden Gemisches zugegeben worden sind

(b1) 60 - 100 Gew.-% eines mindestens eine Carboxylgruppe pro Molekül tragenden, mit (a1), (a2) und (a3) copolymerisierbaren ethylenisch ungesättigten Monomeren oder eines Gemisches aus solchen Monomeren zusammen mit

(b2) 0 bis 40 Gew.-% eines carboxylgruppenfreien, mit (a1), (a2), (a3) und (b1) copolymerisierbaren ethylenisch ungesättigten Monomers oder eines Gemisches aus solchen Monomeren

zugegeben werden und weiterpolymerisiert wird und

(III) nach Beendigung der Polymerisation das erhaltene Polyacrylatharz zumindest teilweise neutralisiert und in Wasser dispergiert wird, wobei die Summe der Gewichtsanteile von (b1) und (b2) stets 100 Gew.-% ergibt und (a1), (a2), (a3), (b1) und (b2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise -20°C bis +40°C, aufweist.

2. Wäßrige Beschichtungszusammensetzungen, enthaltend ein wasserverdünnbares Polyacrylatharz als Bindemittel und ein Aminoplastharz als Vernetzungsmittel, dadurch gekennzeichnet, daß das wasserverdünnbare Polyacrylatharz erhältlich ist , indem

(I) ein Gemisch aus

(a1) einem mit (a2), (a3), (b1) und (b2) copolymerisierbaren, im wesentlichen carboxylgruppenfreien (Meth)acrylsäureester oder einem Gemisch aus solchen (Meth)acrylsäureestern und

(a2) einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(a3) einem mit (a1), (a2), (b1) und (b2) copolymerisierbaren, im wesentlichen carboxylgruppenfreien ethylenisch ungesättigten Monomeren oder einem Gemisch aus solchen Monomeren

zu einem organischen Lösemittel oder Lösemittelgemisch gegeben und in Gegenwart mindestens eines Polymerisationsinitiators polymerisiert wird und

(II) nachdem mindestens 80 Gew.-% des aus (a1), (a2) und gegebenenfalls (a3) bestehenden Gemisches zugegeben worden sind

(b1) 60 - 100 Gew.-% eines mindestens eine Carboxylgruppe pro Molekül tragenden, mit (a1), (a2) und (a3) copolymerisierbaren ethylenisch ungesättigten Monomeren oder eines Gemisches aus solchen Monomeren zusammen mit

(b2) 0 bis 40 Gew.-% eines carboxylgruppenfreien, mit (a1), (a2), (a3) und (b1) copolymerisierbaren ethylenisch ungesättigten Monomers oder eines Gemisches aus solchen Monomeren

zugegeben werden und weiterpolymerisiert wird und

(III) nach Beendigung der Polymerisation das erhaltene Polyacrylatharz zumindest teilweise neutralisiert und in Wasser dispergiert wird, wobei die Summe der Gewichtsanteile von (b1) und (b2) stets 100 Gew.-% ergibt und (a1), (a2), (a3), (b1) und (b2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise -20°C bis +40°C, aufweist.

3. Verfahren nach Anspruch 1, dadurch gekennzeichnet, daß in Stufe (1) eine wäßrige, vorzugsweise Metallpigmente enthaltende Basisbeschichtungszusammensetzung aufgebracht wird.

10

4. Verfahren oder Beschichtungszusammensetzungen nach einem der Ansprüche 1 bis 3, dadurch gekennzeichnet, daß in den Stufen (I) und (II) bei einer Temperatur von 80 bis 160°C, vorzugsweise 120 bis 160°C in Gegenwart mindestens eines freie Radikale bildenden Initiators polymerisiert wird und daß die Stufe (I) 2 bis 8 Stunden, vorzugsweise 3 bis 6 Stunden dauert und die Zugabe der Komponenten (b1) und gegebenenfalls (b2) innerhalb von 10 bis 60 Minuten, vorzugsweise innerhalb von 15 bis 45 Minuten, erfolgt.

5. Verfahren oder Beschichtungszusammensetzungen nach einem der Ansprüche 1 bis 4, dadurch gekennzeichnet, daß nach Zugabe von 100 Gew.-% der aus (a1), (a2) und gegebenenfalls (a3) bestehenden Mischung 100 Gew.-% (b1) zugegeben werden.

6. Verfahren oder Beschichtungszusammensetzungen nach einem der Ansprüche 1 bis 5, dadurch gekennzeichnet, daß bei Spritzviskosität der Gehalt an festem Polyacrylatharz und festem Aminoplastharz zusammen 20 bis 45 Gew.-%, vorzugsweise 32 bis 40 Gew.-% beträgt.

7. Wasserverdünnbare Polyacrylatharze, dadurch gekennzeichnet, daß sie erhältlich sind, indem
(I) ein Gemisch aus
(a1) einem mit (a2), (a3), (b1) und (b2) copolymerisierbaren, im wesentlichen carboxylgruppenfreien (Meth)acrylsäureester oder einem Gemisch aus solchen (Meth)acrylsäureestern und
(a2) einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls
(a3) einem mit (a1), (a2), (b1) und (b2) copolymerisierbaren, im wesentlichen carboxylgruppenfreien ethylenisch ungesättigten Monomeren oder einem Gemisch aus solchen Monomeren
zu einem organischen Lösemittel oder Lösemittelgemisch gegeben und in Gegenwart mindestens eines Polymerisationsinitiators polymerisiert wird und
(II) nachdem mindestens 80 Gew.-% des aus (a1), (a2) und gegebenenfalls (a3) bestehenden Gemisches zugegeben worden sind
(b1) 60 - 100 Gew.-% eines mindestens eine Carboxylgruppe pro Molekül tragenden, mit (a1), (a2) und (a3) copolymerisierbaren ethylenisch ungesättigten Monomeren oder eines Gemisches aus solchen Monomeren zusammen mit
(b2) 0 bis 40 Gew.-% eines carboxylgruppenfreien, mit (a1), (a2), (a3) und (b1) copolymerisierbaren ethylenisch ungesättigten Monomers oder eines Gemisches aus solchen Monomeren
zugegeben werden und weiterpolymerisiert wird und
(III) nach Beendigung der Polymerisation das erhaltene Polyacrylatharz zumindest teilweise neutralisiert und in Wasser dispergiert wird, wobei die Summe der Gewichtsanteile von (b1) und (b2) stets 100 Gew.-% ergibt und (a1), (a2), (a3), (b1) und (b2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise 20°C bis +40°C, aufweist.

8. Verfahren zur Herstellung von wasserverdünnbaren Polyacrylatharzen, dadurch gekennzeichnet, daß
(I) ein Gemisch aus
(a1) einem mit (a2), (a3), (b1) und (b2) copolymerisierbaren, im wesentlichen carboxylgruppenfreien (Meth)acrylsäureester oder einem Gemisch aus solchen (Meth)acrylsäureestern und
(a2) einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls
(a3) einem mit (a1), (a2), (b1) und (b2) copolymerisierbaren, im wesentlichen carboxylgruppenfreien ethylenisch ungesättigten Monomeren oder einem Gemisch aus solchen Monomeren
zu einem organischen Lösemittel oder Lösemittelgemisch gegeben und in Gegenwart mindestens eines Polymerisationsinitiators polymerisiert wird und
(II) nachdem mindestens 80 Gew.-% des aus (a1), (a2) und gegebenenfalls (a3) bestehenden Gemisches zugegeben worden sind
(b1) 60 - 100 Gew.-% eines mindestens eine Carboxylgruppe pro Molekül tragenden, mit (a1), (a2) und (a3) copolymerisierbaren ethylenisch ungesättigten Monomeren oder eines Gemisches aus solchen Monomeren zusammen mit

(b2) 0 bis 40 Gew.-% eines carboxylgruppenfreien, mit (a1), (a2), (a3) und (b1) copolymerisierbaren ethylenisch ungesättigten Monomers oder eines Gemisches aus solchen Monomeren zugegeben werden und weiterpolymerisiert wird und

(III) nach Beendigung der Polymerisation das erhaltene Polyacrylatharz zumindest teilweise neutralisiert und in Wasser dispergiert wird, wobei die Summe der Gewichtsanteile von (b1) und (b2) stets 100 Gew.-% ergibt und (a1), (a2), (a3), (b1) und (b2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise 20°C bis +40°C, aufweist.

9. Polyacrylatharze oder Verfahren nach Anspruch 7 oder 8, dadurch gekennzeichnet, daß in den Stufen (I) und (II) bei einer Temperatur von 80 bis 160°C, vorzugsweise 120 bis 160°C in Gegenwart mindestens eines freie Radikale bildenden Initiators polymerisiert wird und daß die Stufe (I) 2 bis 8 Stunden, vorzugsweise 3 bis 6 Stunden dauert und die Zugabe der Komponenten (b1) und gegebenenfalls (b2) innerhalb von 10 bis 60 Minuten , vorzugsweise innerhalb von 15 bis 45 Minuten erfolgt.

10. Polyacrylatharze oder Verfahren nach einem der Ansprüche 7 bis 9, dadurch gekennzeichnet, daß nach Zugabe von 100 Gew.-% der aus (a1), (a2) und gegebenenfalls (a3) bestehenden Mischung 100 Gew.-% (b1) zugegeben werden.

## Claims

1. A process for the production of a multi-layered protective and/or decorative coating on a substrate surface, in which

(1) a suitable pigmented base coating composition is applied to the substrate surface,

(2) a polymer film is formed from the composition applied in stage (1),

(3) a transparent aqueous top coating composition containing a water-dilutable polyacrylate resin as the binder and an aminoplast resin as the crosslinking agent is applied to the base layer thus obtained, and

(4) the base layer is then stoved together with the top layer,

wherein the top coating composition contains, as the binder, a water-dilutable polyacrylate resin which is obtainable by

(I) adding a mixture of

(a1) a (meth)acrylic acid ester which is copolymerizable with (a2), (a3), (b1) and (b2) and is essentially free from carboxyl groups, or a mixture of such (meth)acrylic acid esters and

(a2) an ethylenically unsaturated monomer which is copolymerizable with (a1), (a3), (b1) and (b2), carries at least one hydroxyl group per molecule and is essentially free from carboxyl groups, or a mixture of such monomers, and if appropriate

(a3) an ethylenically unsaturated monomer which is copolymerizable with (a1), (a2), (b1) and (b2) and is essentially free from carboxyl groups, or a mixture of such monomers,

to an organic solvent or solvent mixture and polymerizing the mixture in the presence of at least one polymerization initiator, and

(II) when at least 80% by weight of the mixture consisting of (a1), (a2) and if appropriate (a3) has been added, adding

(b1) 60 - 100% by weight of an ethylenically unsaturated monomer which carries at least one carboxyl group per molecule and is copolymerizable with (a1), (a2) and (a3), or of a mixture of such monomers, together with

(b2) 0 to 40% by weight of an ethylenically unsaturated monomer which is free from carboxyl groups and is copolymerizable with (a1), (a2), (a3) and (b1), or of a mixture of such monomers,

and further polymerizing the mixture, and

(III) when the polymerization has ended, at least partly neutralizing the resulting polyacrylate resin and dispersing it in water, the sum of the amounts by weight of (b1) and (b2) always giving 100% by weight and the nature and amount of (a1), (a2), (a3), (b1) and (b2) being chosen so that the polyacrylate resin has a hydroxyl number of 40 to 200, preferably 60 to 140, an acid number of 20 to 100, preferably 25 to 50, and a glass transition temperature ($T_G$) of -40°C to +60°C, preferably -20°C to +40°C.

2. An aqueous coating composition containing a water-dilutable polyacrylate resin as the binder and an aminoplast resin as the crosslinking agent, wherein the water-dilutable polyacrylate resin is obtainable by

(I) adding a mixture of

(a1) a (meth)acrylic acid ester which is copolymerizable with (a2), (a3), (b1) and (b2) and is essentially free from carboxyl groups, or a mixture of such (meth)acrylic acid esters and

(a2) an ethylenically unsaturated monomer which is copolymerizable with (a1), (a3), (b1) and (b2), carries at least one hydroxyl group per molecule and is essentially free from carboxyl groups, or a mixture of such monomers, and if appropriate

(a3) an ethylenically unsaturated monomer which is copolymerizable with (a1), (a2), (b1) and (b2) and is essentially free from carboxyl groups, or a mixture of such monomers,

to an organic solvent or solvent mixture and polymerizing the mixture in the presence of at least one polymerization initiator, and

(II) when at least 80% by weight of the mixture consisting of (a1), (a2) and if appropriate (a3) has been added, adding

(b1) 60 - 100% by weight of an ethylenically unsaturated monomer which carries at least one carboxyl group per molecule and is copolymerizable with (a1), (a2) and (a3), or of a mixture of such monomers, together with

(b2) 0 to 40% by weight of an ethylenically unsaturated monomer which is free from carboxyl groups and is copolymerizable with (a1), (a2), (a3) and (b1), or of a mixture of such monomers,

and further polymerizing the mixture, and

(III) when the polymerization has ended, at least partly neutralizing the resulting polyacrylate resin and dispersing it in water, the sum of the amounts by weight of (b1) and (b2) always giving 100% by weight and the nature and amount of (a1), (a2), (a3), (b1) and (b2) being chosen so that the polyacrylate resin has a hydroxyl number of 40 to 200, preferably 60 to 140, an acid number of 20 to 100, preferably 25 to 50, and a glass transition temperature ($T_G$) of -40°C to +60°C, preferably -20°C to +40°C.

3. A process as claimed in claim 1, wherein an aqueous base coating composition preferably containing metal pigments is applied in stage (1).

4. A process or coating composition as claimed in any one of claims 1 to 3, wherein the polymerization in stages (I) and (II) is carried out at a temperature of 80 to 160°C, preferably 120 to 160°C, in the presence of at least one initiator which forms free radicals, and stage (I) takes 2 to 8 hours, preferably 3 to 6 hours, and the addition of components (b1) and if appropriate (b2) is carried out in the course of 10 to 60 minutes, preferably in the course of 15 to 45 minutes.

5. A process or coating composition as claimed in any one of claims 1 to 4, wherein, after addition of 100% by weight of the mixture consisting of (a1), (a2) and if appropriate (a3), 100% by weight of (b1) is added.

6. A process or coating composition as claimed in any one of claims 1 to 5, wherein the content of solid polyacrylate resin and solid aminoplast resin together at the spraying viscosity is 20 to 45% by weight, preferably 32 to 40% by weight.

7. A water-dilutable polyacrylate resin which is obtainable by

(I) adding a mixture of

(a1) a (meth)acrylic acid ester which is copolymerizable with (a2), (a3), (b1) and (b2) and is essentially free from carboxyl groups, or a mixture of such (meth)acrylic acid esters and

(a2) an ethylenically unsaturated monomer which is copolymerizable with (a1), (a3), (b1) and (b2), carries at least one hydroxyl group per molecule and is essentially free from carboxyl groups, or a mixture of such monomers, and if appropriate

(a3) an ethylenically unsaturated monomer which is copolymerizable with (a1), (a2), (b1) and (b2) and is essentially free from carboxyl groups, or a mixture of such monomers,

to an organic solvent or solvent mixture and polymerizing the mixture in the presence of at least one polymerization initiator, and

(II) when at least 80% by weight of the mixture consisting of (a1), (a2) and if appropriate (a3) has been added, adding

EP 0 365 775 B1

(b1) 60 - 100% by weight of an ethylenically unsaturated monomer which carries at least one carboxyl group per molecule and is copolymerizable with (a1), (a2) and (a3), or of a mixture of such monomers, together with

(b2) 0 to 40% by weight of an ethylenically unsaturated monomer which is free from carboxyl groups and is copolymerizable with (a1), (a2), (a3) and (b1), or of a mixture of such monomers, and further polymerizing the mixture, and

(III) when the polymerization has ended, at least partly neutralizing the resulting polyacrylate resin and dispersing it in water, the sum of the amounts by weight of (b1) and (b2) always giving 100% by weight and the nature and amount of (a1), (a2), (a3), (b1) and (b2) being chosen so that the polyacrylate resin has a hydroxyl number of 40 to 200, preferably 60 to 140, an acid number of 20 to 100, preferably 25 to 50, and a glass transition temperature ($T_G$) of -40°C to +60°C, preferably -20°C to +40°C.

8. A process for the preparation of a water-dilutable polyacrylate resin, which comprises

(I) adding a mixture of

(a1) a (meth)acrylic acid ester which is copolymerizable with (a2), (a3), (b1) and (b2) and is essentially free from carboxyl groups, or a mixture of such (meth)acrylic acid esters and

(a2) an ethylenically unsaturated monomer which is copolymerizable with (a1), (a3), (b1) and (b2), carries at least one hydroxyl group per molecule and is essentially free from carboxyl groups, or a mixture of such monomers, and if appropriate

(a3) an ethylenically unsaturated monomer which is copolymerizable with (a1), (a2), (b1) and (b2) and is essentially free from carboxyl groups, or a mixture of such monomers,

to an organic solvent or solvent mixture and polymerizing the mixture in the presence of at least one polymerization initiator, and

(II) when at least 80% by weight of the mixture consisting of (a1), (a2) and if appropriate (a3) has been added, adding

(b1) 60 - 100% by weight of an ethylenically unsaturated monomer which carries at least one carboxyl group per molecule and is copolymerizable with (a1), (a2) and (a3), or of a mixture of such monomers, together with

(b2) 0 to 40% by weight of an ethylenically unsaturated monomer which is free from carboxyl groups and is copolymerizable with (a1), (a2), (a3) and (b1), or of a mixture of such monomers, and further polymerizing the mixture, and

(III) when the polymerization has ended, at least partly neutralizing the resulting polyacrylate resin and dispersing it in water, the sum of the amounts by weight of (b1) and (b2) always giving 100% by weight and the nature and amount of (a1), (a2), (a3), (b1) and (b2) being chosen so that the polyacrylate resin has a hydroxyl number of 40 to 200, preferably 60 to 140, an acid number of 20 to 100, preferably 25 to 50, and a glass transition temperature ($T_G$) of -40°C to +60°C, preferably -20°C to +40°C.

9. A polyacrylate resin or process as claimed in either of claims 7 and 8, wherein the polymerization in stages (I) and (II) is carried out at a temperature of 80 to 160°C, preferably 120 to 160°C, in the presence of at least one initiator which forms free radicals, and stage (I) takes 2 to 8 hours, preferably 3 to 6 hours, and the addition of components (b1) and if appropriate (b2) is carried out in the course of 10 to 60 minutes, preferably in the course of 15 to 45 minutes.

10. A polyacrylate resin or process as claimed in any one of claims 7 to 9, wherein, after addition of 100% by weight of the mixture consisting of (a1), (a2) and if appropriate (a3), 100% by weight of (b1) is added.

**Revendications**

1. Procédé de fabrication d'un revêtement à plusieurs couches, protecteur et/ou décoratif, sur une surface de substrat, suivant lequel :

(1) on applique, sur la surface de substrat, une composition de revêtement de base pigmentée appropriée ;

(2) à partir de la composition appliquée à l'étape (1), on forme un film de polymère :

(3) sur la couche de base ainsi obtenue, on applique une composition de revêtement de recouvrement, aqueuse, transparente, contenant une résine de polyacrylate diluable dans l'eau en tant que

14

liant et une résine aminoplaste en tant qu'agent réticulant ; puis

(4) on soumet à une cuisson la couche de base conjointement avec la couche de recouvrement,

caractérisé par le fait que la composition de revêtement de base contient une résine de polyacrylate diluable dans l'eau en tant que liant, résine qui peut être obtenue

(I) en ajoutant à un solvant organique ou à un mélange de solvants organiques, un mélange de :

(a1) un ester de l'acide (méth)acrylique sensiblement exempt de groupes carboxyle, copolymérisable avec (a2), (a3), (b1) et (b2), ou un mélange de tels esters de l'acide (méth)acrylique ; et

(a2) un monomère à insaturation éthylénique, copolymérisable avec (a1), (a3), (b1) et (b2), qui porte au moins un groupe hydroxyle par molécule et qui est sensiblement exempt de groupes carboxyle, ou un mélange de tels monomères, et, le cas échéant,

(a3) un monomère à insaturation éthylénique, sensiblement exempt de groupes carboxyle, copolymérisable avec (a1), (a2), (b1) et (b2), ou un mélange de tels monomères,

et en polymérisant en présence d'au moins un initiateur de polymérisation ; et

(II) après qu'au moins 80% en poids du mélange se composant de (a1), (a2) et, le cas échéant, (a3), aient été ajoutés, en ajoutant :

(b1) 60 à 100 % en poids d'un monomère à insaturation éthylénique, copolymérisable avec (a1), (a2) et (a3), portant au moins un groupe carboxyle par molécule, ou un mélange de tels monomères, conjointement avec :

(b2) 0 à 40 % en poids d'un monomère à insaturation éthylénique, copolymérisable avec (a1), (a2), (a3) et (b1), exempt de groupes carboxyle, ou un mélange de tels monomères,

et en poursuivant la polymérisation ; et

(III) après l'achèvement de la polymérisation, en neutralisant au moins partiellement la résine de polyacrylate obtenue et en la dispersant dans l'eau, la somme des fractions pondérales de (b1) et (b2) donnant toujours 100 % en poids, et (a1), (a2), (a3), (b1) et (b2) étant choisis en type et en quantité de telle sorte que la résine de polyacrylate présente un indice d'hydroxyle de 40 à 200, de préférence, de 60 à 140, un indice d'acide de 20 à 100, de préférence, de 25 à 50, et une température de transition vitreuse ($T_G$) de -40°C à +60°C, de préférence, de -20°C à +40°C.

2. Compositions aqueuses de revêtement, contenant une résine de polyacrylate diluable dans l'eau en tant que liant et une résine aminoplaste en tant qu'agent réticulant, caractérisées par le fait que la résine de polyacrylate diluable dans l'eau peut être obtenue :

(I) en ajoutant à un solvant organique ou à un mélange de solvants organiques :

un mélange se composant de :

(a1) un ester de l'acide (méth)acrylique sensiblement exempt de groupes carboxyle, copolymérisable avec (a2), (a3), (b1) et (b2), ou un mélange de tels esters de l'acide (méth)acrylique ; et

(a2) un monomère à insaturation éthylénique, copolymérisable avec (a1), (a3), (b1) et (b2), qui porte au moins un groupe hydroxyle par molécule et qui est sensiblement exempt de groupes carboxyle, ou un mélange de tels monomères et, le cas échéant,

(a3) un monomère à insaturation éthylénique, sensiblement exempt de groupes carboxyle, copolymérisable avec (a1), (a2), (b1) et (b2), ou un mélange de tels monomères,

et en polymérisant en présence d'au moins un initiateur de polymérisation, et

(II) après qu'au moins 80% en poids du mélange se composant de (a1), (a2) et, le cas échéant (a3), aient été ajoutés, en ajoutant :

(b1) 60 à 100% en poids d'un monomère à insaturation éthylénique, copolymérisable avec (a1), (a2) et (a3), portant au moins un groupe carboxyle par molécule, ou un mélange de tels monomères, conjointement avec

(b2) 0 à 40% en poids d'un monomère à insaturation éthylénique, copolymérisable avec (a1), (a2), (a3) et (b1), exempt de groupes carboxyle, ou un mélange de tels monomères,

et en poursuivant la polymérisation ; et

(III) après l'achèvement de la polymérisation, en neutralisant au moins partiellement la résine de polyacrylate obtenue et en la dispersant dans l'eau, la somme des fractions pondérales de (b1) et (b2) donnant toujours 100% en poids, et (a1), (a2), (a3), (b1) et (b2) étant choisis en type et en quantité de telle sorte que la résine de polyacrylate présente un indice d'hydroxyle de 40 à 200, de préférence, de 60 à 140, un indice d'acide de 20 à 100, de préférence, de 25 à 50, et une température de transition vitreuse ($T_G$) de -40°C à +60°C, de préférence, de -20°C à +40°C.

**3.** Procédé selon la revendication 1, caractérisé par le fait qu'à l'étape (1), on applique une composition aqueuse de revêtement de base, de préférence contenant des pigments métalliques.

**4.** Procédé ou compositions de revêtement selon l'une quelconque des revendications 1 à 3, caractérisé-(es) par le fait que, dans les étapes (I) et (II), on polymérise à une température de 80 à 160°C, de préférence, de 120 à 160°C, en présence d'au moins un initiateur formant des radicaux libres, et que l'étape (I) dure de 2 à 8 heures, de préférence, de 3 à 6 heures, et l'addition des composants (b1) et, le cas échéant, (b2) a lieu en l'espace de 10 à 60 minutes, de préférence, en l'espace de 15 à 45 minutes.

**5.** Procédé ou compositions de revêtement selon l'une quelconque des revendications 1 à 4, caractérisé-(es) par le fait qu'après l'addition de 100% en poids du mélange se composant de (a1), (a2) et, le cas échéant, (a3), on ajoute 100% en poids de (b1).

**6.** Procédé ou compositions de revêtement selon l'une quelconque des revendications 1 à 5, caractérisé-(es) par le fait que, pour la viscosité de pulvérisation, la teneur en résine de polyacrylate solide et en résine aminoplaste solide s'élève conjointement à 20 à 45% en poids, de préférence, à 32 à 40% en poids.

**7.** Résines de polyacrylate diluables dans l'eau, caractérisées par le fait qu'elles peuvent être obtenue :
(I) en ajoutant à un solvant organique ou à un mélange de solvants organiques :

un mélange se composant de :
(a1) un ester de l'acide (méth)acrylique sensiblement exempt de groupes carboxyle, copolymérisable avec (a2), (a3), (b1) et (b2), ou un mélange de tels esters de l'acide (méth)acrylique ; et
(a2) un monomère à insaturation éthylénique, copolymérisable avec (a1), (a3), (b1) et (b2), qui porte au moins un groupe hydroxyle par molécule et qui est sensiblement exempt de groupes carboxyle, ou un mélange de tels monomères et, le cas échéant,
(a3) un monomère à insaturation éthylénique, sensiblement exempt de groupes carboxyle, copolymérisable avec (a1), (a2), (b1) et (b2), ou un mélange de tels monomères,
et en polymérisant en présence d'au moins un initiateur de polymérisation, et
(II) après qu'au moins 80% en poids du mélange se composant de (a1), (a2) et, le cas échéant (a3), aient été ajoutés, en ajoutant :
(b1) 60 à 100% en poids d'un monomère à insaturation éthylénique, copolymérisable avec (a1), (a2) et (a3), portant au moins un groupe carboxyle par molécule, ou un mélange de tels monomères, conjointement avec
(b2) 0 à 40% en poids d'un monomère à insaturation éthylénique, copolymérisable avec (a1), (a2), (a3) et (b1), exempt de groupes carboxyle, ou un mélange de tels monomères,
et en poursuivant la polymérisation ; et
(III) après l'achèvement de la polymérisation, en neutralisant au moins partiellement la résine de polyacrylate obtenue et en la dispersant dans l'eau, la somme des fractions pondérales de (b1) et (b2) donnant toujours 100% en poids, et (a1), (a2), (a3), (b1) et (b2) étant choisis en type et en quantité de telle sorte que la résine de polyacrylate présente un indice d'hydroxyle de 40 à 200, de préférence, de 60 à 140, un indice d'acide de 20 à 100, de préférence, de 25 à 50, et une température de transition vitreuse ($T_G$) de -40°C à +60°C, de préférence, de -20°C à +40°C.

**8.** Procédé de fabrication de résines de polyacrylate diluables dans l'eau, caractérisé par le fait que :
(I) on ajoute à un solvant organique ou à un mélange de solvants organiques, un mélange de :
(a1) un ester de l'acide (méth)acrylique sensiblement exempt de groupes carboxyle, copolymérisable avec (a2), (a3), (b1) et (b2), ou un mélange de tels esters de l'acide (méth)acrylique ; et
(a2) un monomère à insaturation éthylénique, copolymérisable avec (a1), (a3), (b1) et (b2), qui porte au moins un groupe hydroxyle par molécule et qui est sensiblement exempt de groupes carboxyle, ou un mélange de tels monomères, et, le cas échéant,
(a3) un monomère à insaturation éthylénique, sensiblement exempt de groupes carboxyle, copolymérisable avec (a1), (a2), (b1) et (b2), ou un mélange de tels monomères,
et on polymérise en présence d'au moins un initiateur de polymérisation, et
(II) après qu'au moins 80% en poids du mélange se composant de (a1), (a2) et, le cas échéant, (a3), aient été ajoutés, on ajoute :

(b1) 60 à 100 % en poids d'un monomère à insaturation éthylénique, copolymérisable avec (a1), (a2) et (a3), portant au moins un groupe carboxyle par molécule, ou un mélange de tels monomères, conjointement avec :

(b2) 0 à 40 % en poids d'un monomère à insaturation éthylénique, copolymérisable avec (a1), (a2), (a3) et (b1), exempt de groupes carboxyle, ou un mélange de tels monomères, et on poursuit la polymérisation ; et

(III) après l'achèvement de la polymérisation, on neutralise au moins partiellement la résine de polyacrylate obtenue et on la disperse dans l'eau, la somme des fractions pondérale de (b1) et (b2) donnant toujours 100 % en poids, et (a1), (a2), (a3), (b1) et (b2) étant choisis en type et en quantité de telle sorte que la résine de polyacrylate présente un indice d'hydroxyle de 40 à 200, de préférence, de 60 à 140, un indice d'acide de 20 à 100, de préférence, de 25 à 50, et une température de transition vitreuse ($T_G$) de -40°C à +60°C, de préférence, de -20°C à +40°C.

9. Résines de polyacrylate ou procédé selon la revendication 7 ou 8, caractérisé(es) par le fait que, dans les étapes (I) et (II) on polymérise à une température de 80 à 160°C, de préférence, de 120 à 160°C, en présence d'au moins un initiateur formant des radicaux libres, et que l'étape (I) dure de 2 à 8 heures, de préférence, de 3 à 6 heures, et l'addition des composants (b1) et, le cas échéant, (b2) a lieu en l'espace de 10 à 60 minutes, de préférence, en l'espace de 15 à 45 minutes.

10. Résines de polyacrylate ou procédé selon l'une quelconque des revendications 7 à 9, caractérisé(es) par le fait qu'après l'addition de 100% en poids du mélange se composant de (a1), (a2) et, le cas échéant, (a3), on ajoute 100% en poids de (b1).